# EUROPEAN PATENT APPLICATION

(11) **EP 4 401 031 A1**
(43) Date of publication of application: **17.07.2024**
(21) Application number: 22904463.1
(22) Date of filing: 31.10.2022
(51) Int. Cl.: G06Q 50/26, H04L 9/06, H04L 9/00

(54) **CONTROL METHOD FOR BLOCKCHAIN-BASED EVIDENCE DATA NOTARIZATION SYSTEM, AND RECORDING MEDIUM AND SYSTEM FOR PERFORMING SAME**

(30) Priority: 08.12.2021 KR 20210175172
(71) Applicant: Korea University Research and Business Foundation, Seoul 02841 (KR)
(72) Inventor: IN, Hoh Peter, Seoul 04385 (KR); CHOI, Jihyok, Seoul 05348 (KR)
(74) Representative: RGTH
(86) International application number: PCT/KR2022/016801
(87) International publication number: WO 2023/106629

(57) **Abstract**

There is provided with a blockchain-based evidence data notarization system comprising a user terminal for transmitting the evidence data in accordance with a notarization request; a notary server for transmitting the generated hash value to the user terminal and a notary terminal, respectively; and a blockchain server for receiving a signature written in the hash value from the user terminal and the notary terminal, respectively and generating a smart contract block.

## Description

### Technical Field

The present invention relates to a method of controlling a blockchain-based evidence notarization system, a recording medium and system for performing the same, and more particularly, the present invention relates to a method of controlling a block chain-based evidence notarization system for notarizing evidence, and a recording medium and system for performing the same

### Background Art

Due to the recent change to trial-centered judgement, the evidential ability of digital evidence collected by an investigative agency occupies an important part of case adjudication, and as digital evidence plays a key role in the investigation process, the issue of securing reliability is emerging. In addition, since the digital evidence is invisible, the identity and integrity of the evidence are important.

Since the release of Bitcoin based on blockchain in 2009, the blockchain has been applied in various fields including not only an electronic money system such as Bitcoin, but also platform provision services for a smart contracts, cloud storage services, blockchain computing services and so on.

A distributed ledger, which is the most important element that makes up such a blockchain, is a key technology that makes the blockchain a de-centralized system, and the distributed ledger refers to a form in which all nodes participating in a blockchain network own and manage the same ledger, rather than a centralized server owning a database that stores data such as transaction record, etc.

The blockchain technology has the advantage of being combined with loT technology to ensure transparency through monitoring of the entire process and to clearly identify who is responsible if any problem occurs during the process.

Therefore, there is a demand for a blockchain-based evidence data notarization system that secures the reliability and integrity of evidence by storing notarized evidence data in a blockchain in conjunction with a notary public agency.

### Technical problems to solved by the Invention

The technical problem to be solved by the present invention is to provide a method of controlling a blockchain-based evidence data notarization system that secures the reliability of evidence data by notarizing the evidence data in a notary agency server and that makes it impossible to forge the evidence data by storing the notarized evidence data in a blockchain server, and a recording medium and an apparatus for performing the method.

However, the technical problem to be achieved by the present embodiment is not limited to the technical problem as described above, and other technical problems may exist.

### Means for Solving the Problems

According to an aspect of the present invention, a blockchain-based evidence data notarization system for notarizing the evidence data based on a blockchain in response to a notarization request for evidence data from a user may comprise: a user terminal for transmitting the evidence data in accordance with the notarization request; a notary server for receiving the evidence data, generating a hash value for the evidence data by encrypting the received evidence data, and transmitting the generated hash value to the user terminal and a notary terminal that performs the notarization for the evidence data, respectively; and a blockchain server for receiving a signature written in the hash value from the user terminal and the notary terminal, respectively and generating a smart contract block based on the hash value in which the signatures has been written.

In addition, the notary server may comprise a communication unit for receiving the evidence data from the user terminal; a member management unit for managing information of the user; an encryption unit for generating a hash value by encrypting the evidence data; and a cloud interlocking unit for, upon matching of the evidence data and the hash value, interlocking with a cloud storage so that the evidence data and the hash value are matched and stored in the cloud storage.

In addition, the blockchain server may comprise a communication unit for receiving a transaction signature of the user from the user terminal and a transaction signature of the notary from the notary terminal; a signature management unit for verifying the received transaction signature of the user and transaction signature of the notary and storing the verified transaction signatures; a smart contract block management unit, upon execution of the transaction, for generating a smart contract block; a token generating unit for generating a token based on the smart contract block; and a wallet interlocking unit for interlocking with the electronic wallet through an integrated API so that the token generated by the token generating unit is stored.

In addition, upon reception of a search request for evidence data from the user terminal, the notary server may request the block chain server to confirm whether the smart contract block including the user signature exists.

In addition, upon reception of a signal indicating that the smart contract block including the user signature from the blockchain server exists, the notary server may transmit the hash value of the user's notarized evidence data stored in the cloud from the cloud interlocking unit to the user terminal.

In addition, the user terminal may transmit the hash value of the notarized evidence to an evidence data requesting agency terminal.

According to another aspect of the present invention, a method of controlling a blockchain-based evidence data notarization system for notarizing the evidence data based on a blockchain in response to a notarization request for evidence data from a user comprising: transmitting, by the user terminal, the evidence data in accordance with the notarization request; receiving, by the notary server, the evidence data; generating a hash value for the evidence data by encrypting the received evidence data and transmitting the generated hash value to the user terminal and a notary terminal that performs the notarization for the evidence data, respectively; and receiving, by the blockchain server, a signature written on the hash value from the user terminal and the notary terminal, respectively and generating a smart contract block based on the hash value on which the signature has been written.

In addition, the notary server may receive the evidence data from the user terminal; manage the information of the user; generate a hash value by encrypting the evidence data; and interlock with a cloud storage so that the evidence and the hash value are matched and stored in the cloud storage.

In addition, the blockchain server may receive a transaction signature of the user from the user terminal; receive a transaction signature of the notary from the notary terminal; verifies the received transaction signature of the user and transaction signature of the notary; store the verified transaction signatures; generate a smart contract block under the execution of the transaction; and generate a token based on the smart contract block, wherein the generated token is stored in an electronic wallet interlocked through an integrated API.

According to another aspect of the present invention, a computer program for performing a method of controlling a blockchain-based evidence data notarization system may be recorded in a computer-readable storage medium.

### Effect of the Invention

According to one aspect of the present invention described above, there is the effect of preventing any forgery of the evidence data and proving the integrity of the evidence data by providing a notary server that participates in the node of the blockchain server, having the evidence data notarized and stored the notarized evidence data in the blockchain server.

### Brief Description of the Drawings

FIG. 1 is a conceptual diagram illustrating a blockchain-based evidence data notarization system according to an embodiment of the present invention.
FIG. 2 is a conceptual diagram illustrating a notary server.
FIG. 3 is a conceptual diagram illustrating a blockchain server.
FIG. 4 is a diagram illustrating a smart contract block.
FIGs. 5 and 6 are overall flowcharts illustrating a method of controlling a blockchain-based evidence data notarization system according to an embodiment of the present invention.

### Detailed Description of the Embodiments

The following detailed description of the present invention refers to the accompanying drawings which illustrate, by way of illustration, specific embodiments in which the present invention may be implemented.

These embodiments are described in detail for one skilled in the art to sufficiently implement the present invention.

It should be understood that the various embodiments of the present invention are different from each other but are not necessarily mutually exclusive. For example, specific shapes, structures, and characteristics described herein may be implemented in another embodiment without departing from the spirit and scope of the invention in connection with one embodiment. Additionally, it should be understood that the location or arrangement of individual components in each disclosed embodiment may be changed without departing from the spirit and scope of the invention. Accordingly, the detailed description to be described below is not to be taken in a limiting sense, and the scope of the present invention, if properly described, is limited only by the appended claims, along with all equivalents as claimed by the claims. Like reference numbers in the drawings indicate the same or similar functions throughout the various aspects.

Hereinafter, preferred embodiments of the present invention will be described in more detail with reference to the drawings.

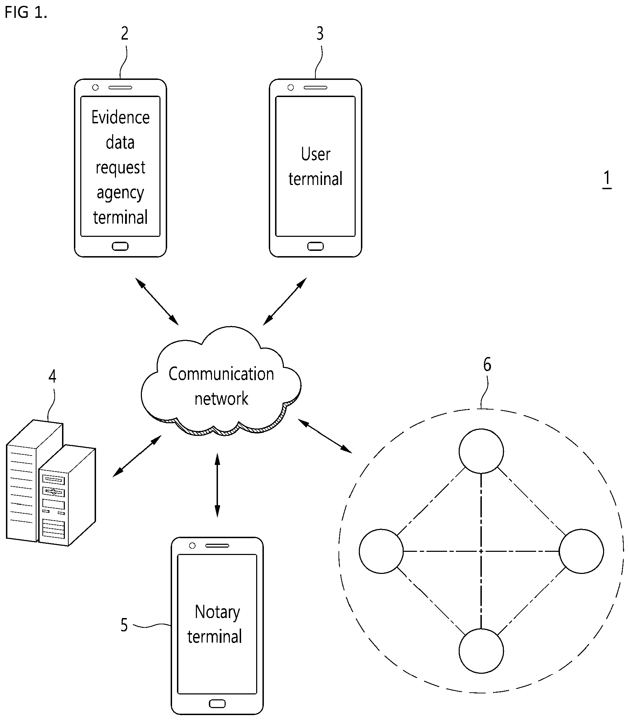

FIG. 1 is a conceptual diagram illustrating a blockchain-based evidence data notarization system according to an embodiment of the present invention.

The blockchain-based evidence data notarization system 1 may include an evidence data requesting agency terminal 2, a user terminal 3, a notary server 4, a notary terminal 5, and a blockchain server 6.

The blockchain-based evidence data notarization system 1 may be a system that notarizes evidence data received from a user.

The user may receive a request for submission of evidence data from the evidence data requesting agency terminal 2. The evidence data requesting agency terminal 2 may be an investigative agency or a court that collects the evidence data, but is not limited thereto.

The user may transmit the corresponding evidence data to the notary server 4 through the user terminal 3. Wherein, the evidence data may be evidence data composed of photos, videos, and text files for determining the presence or absence of a crime.

The notary terminal 5, the user terminal 3, and the evidence data requesting agency terminal 2 are all kinds of handheld-based wireless communication devices such as PCS (Personal Communication System), GSM(Global System for Mobile communications), PDC(Personal Digital Cellular), PHS (Personal Handyphone System), PDA(Personal Digital Assistant), IMT (International Mobile Telecommunication)-2000, CDMA(Code Division Multiple Access)-2000, W-CDMA (W-Code Division Multiple Access), Wibro(Wireless Broadband Internet)terminal, smartphones, smartpads, tablet PCs and the like, and computing devices such as stationary PCs and notebooks.

Wherein, the notary server 4 may be a platform prepared to implement the blockchain-based evidence data notarization system 1. The user can request notarization of evidence data through the notary server 4. The notary server 4 may transmit the file received from the user terminal 3 to the notary terminal 5 for notarization thereof.

The user may search the evidence data notarized by the notarization server 4, get the notarized evidence data and transmit it to the evidence data requesting agency terminal 2.

Each components constituting the blockchain-based evidence data notarization system 1 may be connected each other through a network. A network refers to a connection structure capable of exchanging information between nodes such as terminals and servers, and examples of such networks include a 3rd Generation Partnership Project (3GPP) network and a Long Term Evolution (LTE) network, WIMAX(World Interoperability for Microwave Access) network, Internet, LAN(Local Area Network), Wireless LAN(Wireless Local Area Network), WAN(Wide Area Network), PAN(Personal Area Network), Bluetooth network, a satellite broadcasting network, an analog broadcasting network, DMB(Digital Multimedia Broadcasting) network, WiFi, and the like, but are not limited thereto.

The blockchain server 6 may be provided as a plurality of nodes. The blockchain server 6 consists of a small number of peers in which one or more distributed ledgers and chaincodes are stored. The chaincode is executed by CLI instructions and includes Query System ChainCode (QSCC), Endorsement System ChainCode (ESCC), Validation System ChainCode (VSCC), ConFiguration System ChainCode (CSCC) and Lifecycle System ChainCode (LSCC) and the like.

QSCC is a chaincode used when reading data stored in the blockchain, ESCC is a chaincode responsible for guarantee policy, and VSCC is a chaincode used when verifying a block. In addition, CSCC is a chaincode used when setting up a channel, and LSCC is a chaincode used to perform all series of processes from installation of chaincode to instantiation thereof.

In this blockchain server 6, a server by a reliable agency conFigures a fabric network, and a small number of nodes that want to participate in the channel and the notary server 4 create a peer by virtue of the administrator's authority to change the network setting. Wherein, each peer has the ledger stored therein, and after the instance process of installing the chaincode on each peer and notifying the other peers of the interface, the query function of the chaincode can be invoked. In accordance with this structure, the blockchain server 6 can play a role in proving the ledger of a small number of peers by having the reliable notary server 4 participate as a node.

The notary terminal 5, the notary server 4, the evidence data requesting agency terminal 2 and the user terminal 3 can participate as one of a plurality of nodes of the blockchain server 6 and transmit and receive data.

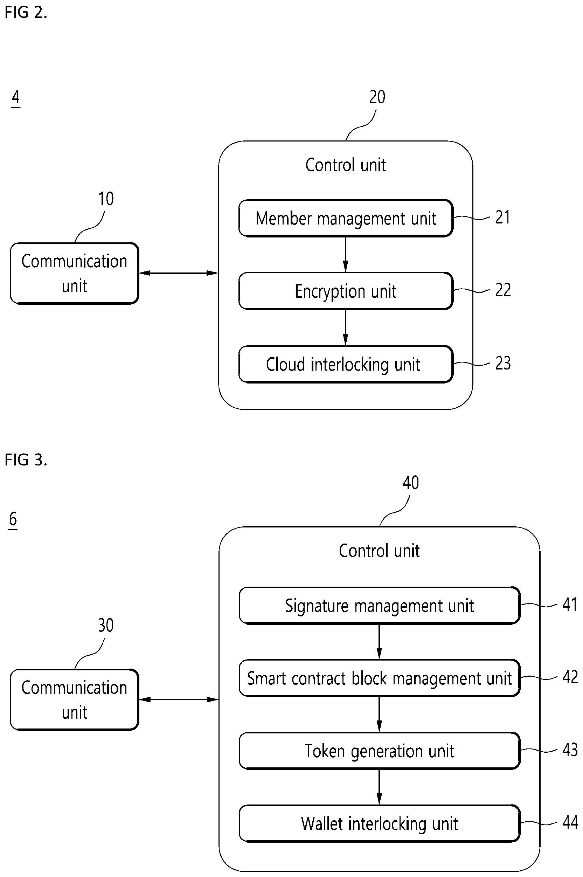

FIG. 2 is a conceptual diagram illustrating a notary server.

The notary server 4 may include a communication unit 10 and a control unit 20, and the control unit 20 may include a member management unit 21, an encryption unit 22 and a cloud interlocking unit 23.

The user can access the notary server 4 using the user terminal 3. The user can generate a unique ID by performing a membership registration procedure in the notary server 4. The membership registration procedure may be performed by a user authentication by an authentication device mounted in the user terminal 3. Wherein, the user authentication may be the user's personal information, ID information, face recognition information, iris information, or fingerprint information, but is not limited thereto.

The member management unit 21 may store and manage user information. The user information may be the user's personal information, ID information, facial recognition information, iris information, or fingerprint information.

The communication unit 10 may receive evidence data from the user terminal 3. Wherein, the evidence data may be an image file, an audio file, a text file or a video file taken from the user terminal 3, but is not limited thereto.

The encryption unit 22 may generate a hash value for a file source code by encrypting a file of evidence data received from the user terminal 3.

The cloud interlocking unit 23 may be interlocked through communication between the cloud and the notary server 4 in order to have the file of the evidence data and the generated hash value matched and stored them in the cloud storage.

The cloud refers to a storage where data, software and various computer resources are stored so that they can be accessed through the Internet without putting them on the hardware owned by the user.

Wherein, the notary server 4 may transmit the hash value of the evidence data to the notary terminal 5 in order to notarize whether the corresponding evidence data is true.

FIG. 3 is a conceptual diagram illustrating a blockchain server. The blockchain server 6 is provided as a plurality of nodes, and the corresponding node may include a communication unit 30, a signature management unit 41, a smart contract block management unit 42 and a wallet interlocking unit 44.

The communication unit 30 may receive the original transaction signature, public key and electronic signature of the user from the user terminal 3.

Wherein, the signature management unit 41 may verify the received original transaction signature of the user and the original transaction signature of the notary, and store the verified original transaction signatures therein. The signature management unit 41 may verify the original transaction signature using the public key. That is, the original transaction signature can be verified by decrypting the electronic signature with the user's public key received from the user terminal 3, comparing it with the hash value obtained by hashing the original transaction signature and confirming that the corresponding electronic signature has not been forged.

If the decrypted electronic signature and the hash value do not match each other, it is determined that the original transaction signature has been forged, and the communication unit 30 may request an electronic signature to the user terminal 3.

The communication unit 30 may receive an original transaction signature, a public key and an electronic signature of the notary from the notary terminal 5. At this time, the original transaction signature can be verified using the public key. That is, the original transaction signature can be verified by decrypting the electronic signature with the public key of the notary received from the notary terminal 5 and comparing it with the hash value obtained by hashing the original transaction signature and confirming that the corresponding electronic signature has not been forged.

If the decrypted electronic signature and the hash value do not match each other, it is determined that the original transaction signature has been forged, and the communication unit 30 may request an electronic signature to the notary terminal 5.

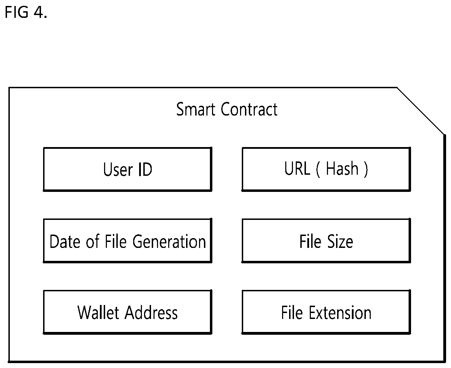

The smart contract block management unit 42 can generate a smart contract block by performing a transaction when it is verified that the original transaction signatures of the user and the notary have not been forged. The information stored in the smart contract block will be described later in detail in connection with FIG. 4.

The token generation unit 43 may generate a token based on a smart contract block. Wherein, the token can be classified into fungible token and non-fungible token. Fungible token can be exchanged with other token of the same type, while non-fungible token cannot be exchanged with other token of the same type. The token of the present invention may be made of a non-fungible token (NFT) of the ERC-721 and ERC-1155 standards of a blockchain network, but is not limited thereto.

The wallet interlocking unit 44 may be interlocked with the electronic wallet through an integrated API so that the token generated by the token generating unit 43 is stored. If a seller's signature is recorded on the smart contract block, one personal online electronic wallet which is relevant to the seller's unique transaction can be automatically generated. The electronic wallet can act like an electronic bank account acting as the seller's unique personal bank account so as to store and withdraw a token. Wherein, the electronic wallet may be one provided with an integrated API and interlocked with a web wallet application such as METAMASK, Klay and MyCrypto.

FIG. 4 is a diagram illustrating a smart contract block.

The smart contract block may include the ID of the user who has joined the notary server 4, the URL address which is the hash value, the date of file generation, the size of the file, the extension of file, the user's wallet address and the original transaction signature information of the user and the notary.

A plurality of smart contract blocks can be prepared and generated in the blockchain server 6. If there are a plurality of evidence data that the user requested to be notarized through the user terminal 3, a smart contract block for each evidence data can be generated.

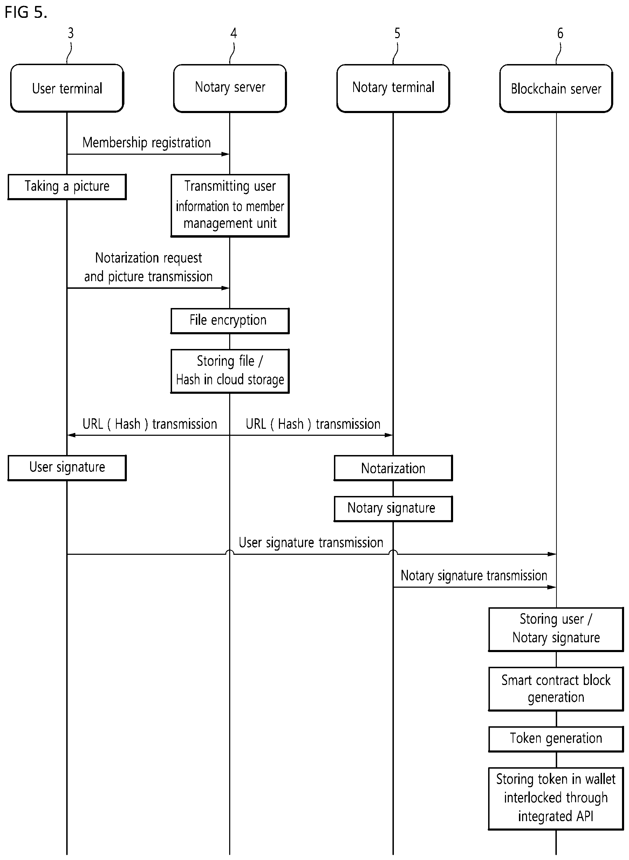

FIG. 5 is an overall flowchart illustrating a method of controlling a blockchain-based evidence data notarization system according to an embodiment of the present invention.

Since the method of controlling the blockchain-based evidence data notarization system according to an embodiment of the present invention proceeds on substantially the same conFiguration as the blockchain-based evidence data notarization system 1 shown in FIG. 1, the same reference numerals are assigned to the same components as the blockchain-based evidence data notarization system 1 of FIG. 1, and repeated descriptions will be omitted.

The user terminal 3 may request membership registration to the notary server 4, and when an authentication procedure for membership registration is performed, user information may be stored in the notary server 4.

The user terminal 3 may take a picture through a camera device provided in the terminal and transmit the file of picture to the notary server 4. Wherein, although not shown in Fig. 5, the file may be a video file, an audio file and a text file, and the type of the file is not limited.

The notary server 4 may generate a hash value by encrypting the file received from the user terminal 3, and may match the file and hash value in conjunction with the cloud and then store them in the cloud.

The notary server 4 may transmit the hash value to the user terminal 3 and the notary terminal 5. The notary terminal 5 may notarize the corresponding evidence data by receiving the hash value.

The notary terminal 5 may transmit the original signature, public key and electronic signature for the transaction to the blockchain server 6, and the user terminal 3 may transmit the original signature, public key and electronic signature for the transaction to the blockchain server 6.

Wherein, the blockchain server 6 may verify the received transaction signature of the user and the original transaction signature of the notary, and store the verified original transaction signatures therein. Verifying the transaction signature may mean verifying the original transaction signature using a public key. That is, it is possible to verify the original transaction signature by decrypting the respective electronic signatures of the user and the notary by the user's public key received from the user terminal 3 and the notary's public key received from the notary terminal 5, comparing the decrypted electronic signatures with the hash value obtained by hashing the original transaction signature and then confirming that the corresponding electronic signatures have not been forged.

When the original transaction signature is verified to be valid, the user's original transaction signature and the notary's original transaction signature may be stored in the blockchain server 6.

When the original transaction signatures of the user and the notary are verified as having not been forged, the blockchain server 6 may performs the transaction and generate a smart contract block. In addition, the blockchain server 6 may generate a token based on the smart contract block, and the corresponding token may be stored in a wallet interlocked with the blockchain server 6.

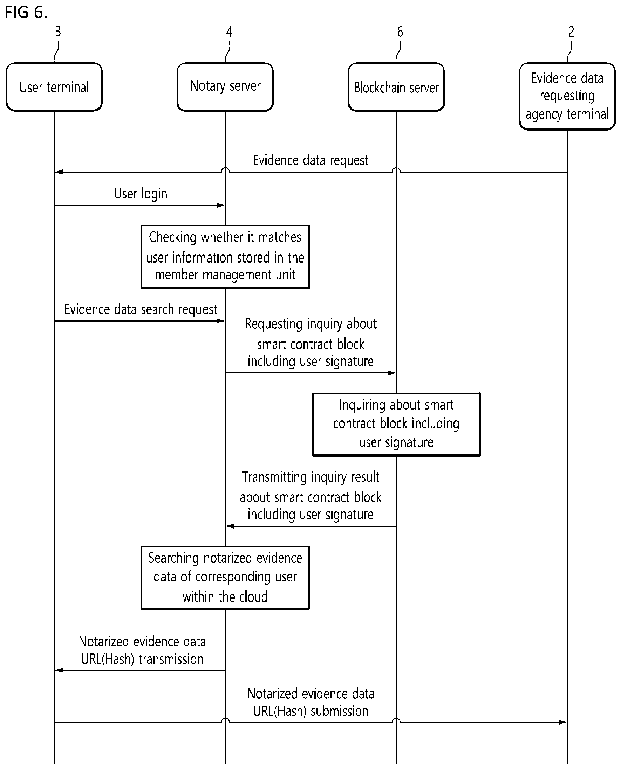

FIG. 6 is an overall flowchart illustrating a method of controlling a blockchain-based evidence data notarization system according to an embodiment of the present invention.

User's evidence data which has been already notarized by the notary and stored in a cloud storage interlocked with the notary server 4 may be submitted to the evidence data requesting agency terminal 2.

Referring to FIG. 6, the user terminal 3 may receive an evidence data submission request signal from the evidence data requesting agency terminal 2. At this time, the user can log in to the notary server 4 to which the user has been registered as a member through user authentication information.

When the user logs in to the notary server 4, it is checked whether the user information stored in the member management unit 21 matches with the user authentication information, and if they match, the user's login can be accepted.

The user may request the notarization server 4 to search for notarized evidence data. At this time, the notary server 4 may request an inquiry to the blockchain server 6 about the existence of the smart contract block including the original transaction signature of the user, and receive the inquiry result from the blockchain server 6. Upon receiving the result that the smart contract block including the original transaction signature of the user exists in the corresponding smart contract block, the notary server 4 may search the user's notarized evidence data list stored in the cloud storage.

At this time, if there are a plurality of the user's notarized evidence data, the notary server 4 can transmit a signal requesting the user terminal 3 to select the evidence data, and the user can select the evidence data through the user terminal 3. At this time, the user may select a plurality of evidence data.

The notary server 4 can transmit the hash value of the corresponding evidence data to the user terminal 3, and the user terminal 3 can submit the evidence data by transmitting the hash value of the corresponding evidence data to the evidence data requesting agency terminal 2.

Although not shown in FIG. 6, the notary server 4 can transmit a signal for selecting a way of issuing evidence data to the user terminal 3. The way of issuing the evidence data may be a token generated by the blockchain server 6 or a hash value of the notarized file.

When a user selects a way of issuing evidence with a token, the communication unit 10 of the notary server 4 can transmit a corresponding signal to the communication unit 30 of the blockchain server 6.

At this time, the token stored in the user's electronic wallet can be transmitted to the electronic wallet address of the evidence data requesting agency terminal 2.

Such method of controlling the blockchain-based evidence data notarization system can be implemented as an application or implemented in the form of program instructions that can be executed through various computer components and recorded on a computer-readable recording medium. A computer-readable recording medium can include program instructions, data files, data structures, etc. alone or in combination thereof. Program instructions recorded on a computer-readable recording medium may be those specially designed and conFigured for the present invention or may be known and usable to those skilled in the art of computer software.

Examples of computer-readable recording media include magnetic media such as hard disks, floppy disks and magnetic tapes, optical recording mediums such as CD-ROMs and DVDs, and magneto-optical mediums such as floptical disks, and hardware devices specially conFigured to store and execute program instructions such as ROM, RAM, flash memory and the like.

Examples of program instructions include high-level language codes that can be executed by a computer using an interpreter or the like as well as machine language codes generated by a compiler. A hardware device may be configured to act as one or more software modules to perform processing according to the present invention and vice versa.

Although the embodiments of the present invention have been described above, the spirit of the present invention is not limited to the embodiments presented herein, and those skilled in the art who understand the spirit of the present invention can easily propose other embodiments by means of additions, changes, deletions, etc. of components within the scope of the same spirit, but these will also fall within the scope of the present invention.

## Claims

1. A blockchain-based evidence data notarization system for notarizing evidence data based on a blockchain in response to a notarization request for the evidence data from a user comprising:
a user terminal for transmitting the evidence data in accordance with the notarization request;
a notary server for receiving the evidence data, generating a hash value for the evidence data by encrypting the received evidence data, and transmitting the generated hash value to the user terminal and a notary terminal that performs notarization for the evidence data, respectively; and
a blockchain server for receiving a signature written in the hash value from the user terminal and the notary terminal, respectively and generating a smart contract block based on the hash value in which the signature has been written.

2. The system according to claim 1, wherein the notary server comprises:
a communication unit for receiving the evidence data from the user terminal;
a member management unit for managing information of the user;
an encryption unit for generating a hash value by encrypting the evidence data; and
a cloud interlocking unit for interlocking with a cloud storage so that the evidence data and the hash value are matched and stored in the cloud storage.

3. The system according to claim 2, wherein the blockchain server comprises:
a communication unit for receiving a transaction signature of the user from the user terminal and a transaction signature of the notary from the notary terminal;
a signature management unit for verifying the received transaction signature of the user and transaction signature of the notary and storing the verified transaction signatures;
a smart contract block management unit, upon execution of the transaction, for generating a smart contract block;
a token generating unit for generating a token based on the smart contract block; and
a wallet interlocking unit for interlocking with the electronic wallet through an integrated API so that the token generated by the token generating unit is stored.

4. The system according to claim 3, wherein upon reception of a search request for evidence data from the user terminal, the notary server is configured to request the block chain server to confirm whether the smart contract block including the user signature exists.

5. The system according to claim 4, wherein
upon reception of a signal indicating that the smart contract block including the user signature from the blockchain server exists, the notary server is configured to transmit the hash value of the user's notarized evidence data stored in the cloud from the cloud interlocking unit to the user terminal.

6. The system according to claim 5, wherein the user terminal is configured to transmit the hash value of the notarized evidence to an evidence data requesting agency terminal.

7. A method of controlling a blockchain-based evidence data notarization system for notarizing the evidence data based on a blockchain in response to a notarization request for evidence data from a user comprising:
transmitting, by the user terminal, the evidence data in accordance with the notarization request; receiving, by the notary server, the evidence data;
generating a hash value for the evidence data by encrypting the received evidence data and transmitting the generated hash value to the user terminal and a notary terminal that performs the notarization for the evidence data, respectively; and receiving, by the blockchain server, a signature written on the hash value from the user terminal and the notary terminal, respectively and generating a smart contract block based on the hash value on which the signature has been written.

8. The method according to claim 7, wherein the notary server receives the evidence data from the user terminal; manages the information of the user; generate a hash value by encrypting the evidence data; and interlocks with a cloud storage so that the evidence and the hash value are matched and stored in the cloud storage.

9. The method according to claim 8, wherein the blockchain server receives a transaction signature of the user from the user terminal; receives a transaction signature of the notary from the notary terminal; verifies the received transaction signature of the user and transaction signature of the notary; stores the verified transaction signatures; generate a smart contract block under the execution of the transaction; and generates a token based on the smart contract block, wherein the generated token is stored in an electronic wallet interlocked through an integrated API.

10. A computer-readable storage medium, having a computer program recorded therein for performing the method of controlling a blockchain-based evidence data notarization system according to any one of claims 7 to 9.
